Europäisches Patentamt

European Patent Office

Office européen des brevets

(11) Veröffentlichungsnummer: **0 291 867 B1**

# EUROPÄISCHE PATENTSCHRIFT

(45) Veröffentlichungstag der Patentschrift: **11.03.92**

(21) Anmeldenummer: **88107683.0**

(22) Anmeldetag: **13.05.88**

(51) Int. Cl.⁵: **F02F 1/14**, F16J 1/08, F16J 10/04, F16B 4/00

54 **Hubkolbenmaschine.**

(30) Priorität: **22.05.87 DE 3717182**

(43) Veröffentlichungstag der Anmeldung:
**23.11.88 Patentblatt 88/47**

(45) Bekanntmachung des Hinweises auf die
Patenterteilung:
**11.03.92 Patentblatt 92/11**

(84) Benannte Vertragsstaaten:
**DE FR GB IT NL**

(56) Entgegenhaltungen:
**DE-A- 1 576 407**
**DE-A- 1 804 857**
**DE-A- 3 035 789**
**US-A- 2 832 653**

(73) Patentinhaber: **Krupp MaK Maschinenbau GmbH**
**Falckensteiner Strasse 2-4**
**W-2300 Kiel 17(DE)**

(72) Erfinder: **Schacht, Hans-Jürgen, Dipl.-Ing.**
**Fischerstrasse 10**
**W-2303 Gettorf(DE)**
Erfinder: **Häfner, Reinhard, Dipl.-Ing.**
**Lärchenstrasse 3**
**W-2307 Schwedeneck 2(DE)**
Erfinder: **Wegener, Wolfgang, Ing. grad.**
**Semmelweisstrasse 35**
**W-2350 Neumünster(DE)**
Erfinder: **Zwingmann, Uwe, Dipl.-Ing.**
**Luisenweg 21**
**W-2300 Kiel 1(DE)**

(74) Vertreter: **Hansmann, Dierk, Dipl.-Ing.**
**Jessenstrasse 4**
**W-2000 Hamburg 50(DE)**

**Beschreibung**

Die Erfindung betrifft eine Hubkolbenmaschine mit in einem Zylinderblock angeordneten Zylinderbuchsen und Kolben mit Kolbenringen, insbesondere eine Verbrennungskraftmaschine, deren Zylinderbuchsen ein äußeres Trägerteil hoher Festigkeit und ein in seinem Inneren gehaltenes, eine Kolbenringlauffläche bildendes, rohrförmiges Innenteil umfassen und von außen durch das Trägerteil dem Verschleißteil durch Kanäle zuführbar ist.

Probleme bei diesen Maschinen hängen vor allem mit der Reibpaarung Kolbenringe/Zylinderlauffläche, mit der Wärmeleitung bzw. Kühlung und mit der Festigkeit des Kolben/Zylinderbereiches zusammen. Diese Probleme können zu Betriebsstörungen führen, die vor allem im Schiffsbetrieb besonders unerwünscht und nicht so leicht zu beheben sind.

Es sind deshalb schon einige Vorschläge gemacht worden, um besonders den durch Abrieb durch die Kolbenbewegung und Korrosion durch die Verbrennungsgase hervorgerufenen Verschleiß der Zylinderbuchsen zu vermindern.

Es ist hierzu gemäß DE-A-20 40 807 und DE-B-23 25 377 vorgeschlagen worden, die Zylinderbuchse mit zylindrisch rundgebogenen Federstahl-Rechteck-Abschnitte auszukleiden. Derartige blech- oder folienartige Abschnitte sind zwar verhältnismäßig einfach auszutauschen; es hat sich jedoch gezeigt, daß der vorgeschriebene Preßsitz trotz des federnden Materials schwer erreichbar ist, da sich bei zu dünnen Abschnitten nachteiligerweise Falten und Buckel und bei zu dicken Abschnitten ein Spalt am Stoß bilden könnten.

Weiter ist vorgeschlagen worden, daß eine dünne Buchse in die Schweißkonstruktion eines Zylinders eingeschoben wird. Hierbei handelt es sich jedoch um eine normale sogenannte "slip-fit"-Buchse, die nicht in der Lage ist, gegen höhere Zünddrücke, wie sie vor allem im Diesel-Betrieb auftreten, abzudichten.

Nach dem Stand der Technik sind auch Ausführungen bekannt, bei denen im Zylinder Arretiermittel für sein eingeschobenes Buchsenteil, wie eine nach innen vorspringende Kante oder einen in einer Ringnut eingesetzten Sprengring als Sicherung in Axialrichtung, vorgesehen sind.

Aus der US-A-28 32 653 ist eine Pumpe bekannt, die eine in eine Bohrung mit unterschiedlichen Innendurchmessern einsetzbare Laufbuchse umfaßt, die über Dichtpackungen zur Bohrungswandung abgedichtet ist. Zum leichteren Einsetzen der Laufbuchse wird in den Raum zwischen Laufbuchse und Bohrungswandung ein Schmiermittel von außen durch Kanäle zugeführt.

Wie aus dem Vorstehenden ersichtlich, ist die Gestaltung und Anbringungsweise der Kolbenringlauffläche noch immer ein großes Problem. Die Aufgabe der Erfindung besteht darin, bei einer gattungsgemäßen Anordnung eine Zylinderbuchse zu schaffen, die mit den jeweiligen Kolbenringen eine möglichst optimale Reibpaarung in der Flüssigreibung bilden kann, wobei gleichzeitig der für Großmotoren wichtigen leichten Reparierbarkeit durch eine möglichst einfache Montage und Austauschbarkeit Rechnung zu tragen ist.

Diese Aufgabe wird erfindungsgemäß dadurch gelöst, daß das einen sich konisch in seiner ganzen Länge nach unten verringernden Außendurchmesser aufweisende, dickwandig mit vorzugsweise 10 - 20 % der Gesamtbuchsenwandstärke ausgeführte Verschleißteil fertig in der Beschaffenheit seiner inneren Oberfläche, vorzugsweise durch Herstellung aus einem oberflächenvergüteten Kugelgraphitguß vorliegt, wobei in dem Trägerteil und in dem in ihm aufgenommenen Verschleißteil miteinander verbundene, mit Schmieröl füllbare Nuten und Ölzuführungsbohrungen vorgesehen sind.

Für Träger- und Verschleißteil werden dadurch Herstellungsverfahren möglich, die für herkömmliche Zylinderbuchsen aus technischen oder kommerziellen Gründen nicht anwendbar sind. Es ist auch bei schon im Betrieb befindlichen Maschinen eine Anwendung möglich. So lassen sich die mit dem Zylinderblock integralen oder fest eingegossenen Zylinderbuchsen in vielen Fällen nach einer entsprechenden Vorbereitung der alten Bohrung durch Aufbohren und Anbringen des Aufnahmeabsatzes für ein neu einzuziehendes Innenteil einrichten, dessen Lauffläche mit den Kolbenringen die erwünschte optimale Reibpaarung bildet, so daß durch die Verringerung der Reibungsverluste eine Leistungssteigerung und außerdem durch leichte Auswechselbarkeit eine Senkung der Betriebskosten erfolgt.

Bei Maschinen mit sogenannten "nassen" Zylinderbuchsen ergeben sich noch dadurch zusätzliche Vorteile, daß bei Zylinderreparaturen die Gefahr einer Vermischung von Schmieröl und Kühlwasser beträchtlich vermindert ist, weil nur ein Innenteil ausgewechselt wird, das mit Kühlwasser nicht in Berührung kommt, und daß Zylinderbuchseninnenteil und zugehöriger Kolbenringsatz gemeinsam als Ersatzteil bereitgehalten werden können, die schon in der Reibpaarung und in den Passungstoleranzen optimal aufeinander abgestimmt sind.

Im allgemeinen wird das Innenteil, das vorteilhafterweise eine Wandstärke von 10-20 % der Gesamtwandstärke der Zylinderbuchse hat, als Verschleißeinsatz einbaufertig in das Trägerteil eingeschrumpft. Das gilt besonders im Reparaturbetrieb. Das Schrumpfmaß des Innenteils in bezug auf das Trägerteil soll dabei einer radialen Anpressung von etwa 0,4 - 0,8 $kp/mm^2$ entsprechen. Bei der Neu-

herstellung lassen sich gegebenenfalls an das Einschrumpfen noch weitere Bearbeitungsvorgänge, wie Feindrehen und Honen, anschließen.

Das Einschrumpfen des Innenteils in das Trägerteil läßt sich bei ungehärteten Innenteilen schon einfacherweise durch Erzeugung einer Temperaturdifferenz zwischen diesen Teilen bewirken. Bei gehärteten Innenteilen ist es empfehlenswert, eine hydraulische Presse anzuwenden. Dabei soll das Innenteil vorzugsweise einen sich wie beim Konus nach unten verringernden Außendurchmesser aufweisen, damit es leichter vom Trägerteil aufgenommen werden kann. Dann braucht nach dem Einsetzen der Teile ineinander gegebenenfalls nur eine Restlänge hydraulisch verschoben zu werden. Zweckmäßigerweise sind hierfür das Trägerteil auf seiner Innenfläche, in deren oberem Bereich, und das Innenteil auf seiner Außenfläche, in deren unterem Bereich, mit schraubenlinienförmigen Nuten mit beim Träger- in bezug auf das Innenteil gegenläufiger Steigung versehen zum Öltransport, um das Einpressen zu erleichtern, und zur Kühlung während des Betriebes.

Durch die Anordnung und Verteilung der Ölnuten ergeben sich daher Vorteile im Betrieb und bei der Montage.

Weitere Ausgestaltungen der Erfindung sind durch die Merkmale der Unteransprüche gekennzeichnet.

In den Zeichnungen sind Ausführungsbeispiele der Erfindung schematisch dargestellt. Es zeigen:

Fig. 1 einen Ausschnitt aus einer Hubkolbenmaschine mit Zylinderblock, Zylinderbuchse aus Trägerteil und verschleißbarem Innenteil und Kolben mit Kolbenringen,

Fig. 2 ein Träger- und ein Innenteil mit Schmierölnuten gegenläufiger Steigung,

Fig. 3 eine Zylinderbuchse mit Zylinderschmierung,

Fig. 4 eine Ausführung der Zylinderbuchse zur Erzielung einer Taktschmierung unter der Wirkung des Gasdruckes,

Fig. 5 eine Ansicht auf die Innenfläche des Innenteils ohne Kolben bei einer Zylinderschmierung unter der Wirkung des Gasdruckes.

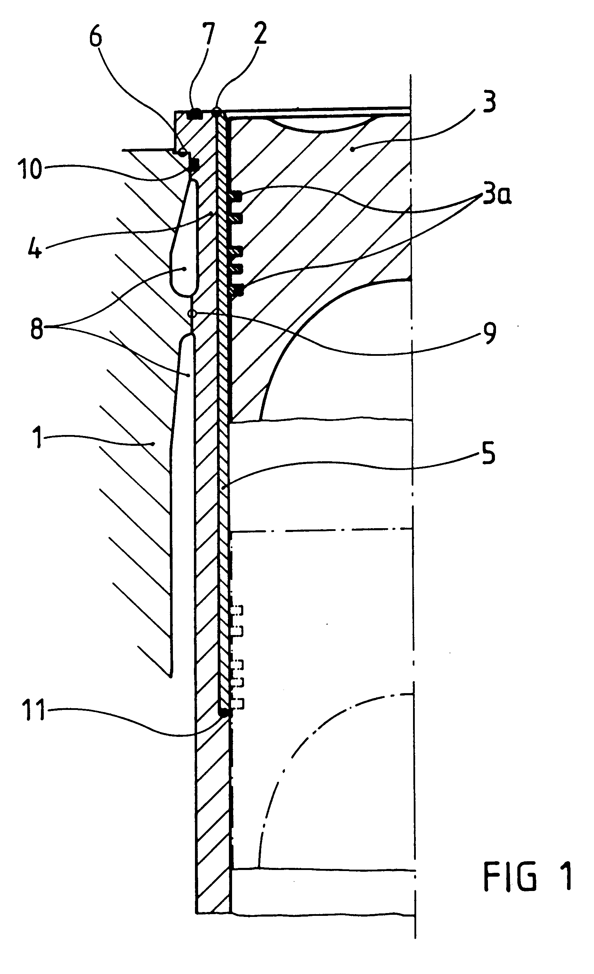

Gemäß Fig. 1 mit einem Ausschnitt aus einer Hubkolbenmaschine ist ein Teil eines Zylinderblockes 1 mit einer Zylinderbuchse 2 und einem Kolben 3 mit Kolbenringen 3a dargestellt. Die Zylinderbuchse 2 besteht aus einem äußeren Trägerteil 4 und einem in diesem aufgenommenen, verschleißbaren und austauschbaren, rohrförmigen Innenteil 5.

Das Trägerteil 4 hat im wesentlichen die Gestalt der bekannten Zylinderbuchsen mit einem Tragbund 6 mit Tragbundauflage 6a, einer Zylinderkopfdichtung 7 im Bund 6, zwischen Zylinderblock 1 und Trägerteil 4 vorgesehenen Kühlwasserräumen 8, Radialanlagen 9 für das Trägerteil 4 an den Zylinderblock 1 und Gummiringabdichtungen 10.

Im Inneren des Trägerteils 4 ist ein Aufnahmeabsatz 11 für das Innenteil 5 vorgesehen, der durch einen Pfeil gekennzeichnet ist.

Das Innenteil 5 bildet zusammen mit den Kolbenringen 3a hinsichtlich der Materialauswahl eine sorgfältig aufeinander abgestimmte Reibpaarung. Bei der vorliegenden Flüssigkeitsreibung mit bekannten Zylinderschmiermitteln und bekannten Kolbenringwerkstoffen hat sich Sphäroguß als vorteilhaft erwiesen, besonders deshalb, weil sich das Material der Lauffläche durch Härten, Legieren, Nitrieren oder als Carbidträger dem Gegenreibwerkstoff der Kolbenringe optimal anpassen läßt.

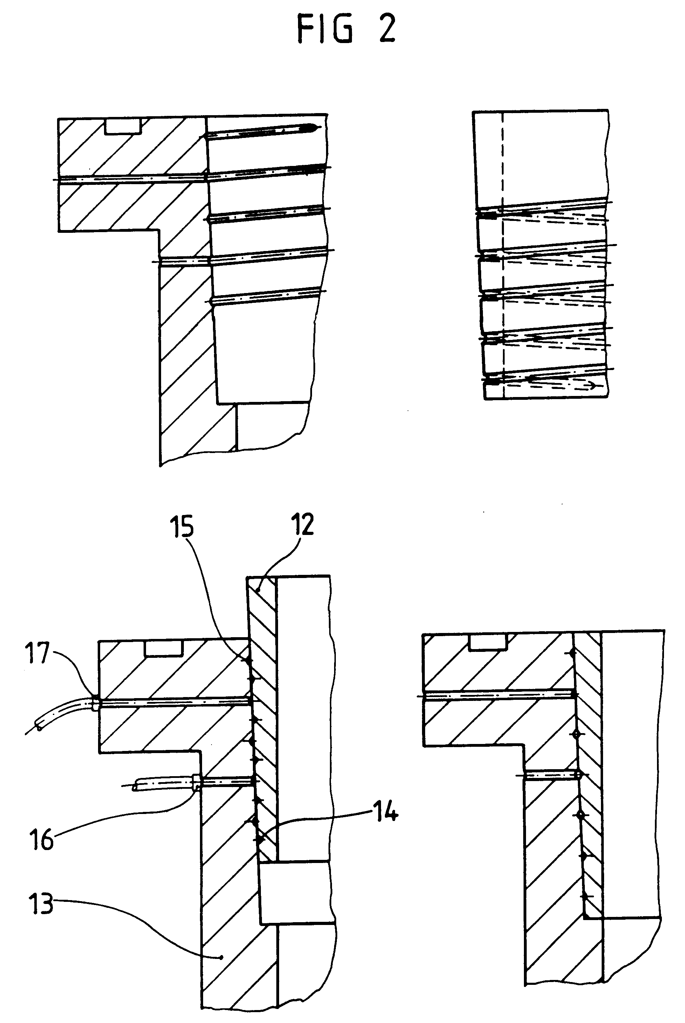

Zur Montage eines Innenteils 5 in einem Trägerteil 4 empfiehlt sich das folgende Vorgehen; dazu siehe Fig. 2. Das Innenteil 12 in Fig. 2 ist in Ausgestaltung der Erfindung mit einem sich konisch nach unten verringernden Außendurchmesser zur Erleichterung des Einbaus in das Trägerteil 13 ausgebildet. Vor dem Einsetzen werden das Trägerteil innen und das Innenteil außen gut eingeölt. Sodann wird das Innenteil zusammen mit einem relativ großen Gewicht in einem Kran aufgehängt, jedoch derart, daß das Innenteil nur durch sein Eigengewicht belastet ist, wenn das Innenteil vom Kran schnell in das Trägerteil abgesenkt wird. Dabei entsteht durch Ölverdrängung die gleiche Wirkung wie durch hydraulischen Pumpendruck.

Beim Einpressen des Innenteils durch hydraulischen Pumpendruck wird nur eine Restlänge hydraulisch verschoben. Dafür muß das Innenteil 12 von oben belastbar sein.

Hierfür sind Nuten 14,15 auf der Außenfläche des Innenteils 12 unten und auf der Innenfläche des Trägerteils 13 oben vorgesehen. Die Nuten 14,15 weisen vorzugsweise Schraubenlinienform mit gegenläufiger Steigung auf, damit das Öl in allen Stellungen und Höhen fließen kann, und werden über die Zuführungen 16,17 mit Öl versorgt.

Weiterhin läßt sich die Aufteilung einer Zylinderbuchse im Trägerteil und reibtechnisch optimal abgestimmtes Innenteil in vorteilhafter Weise mit einer technisch fortschrittlichen Zylinder-Schmierung vereinigen.

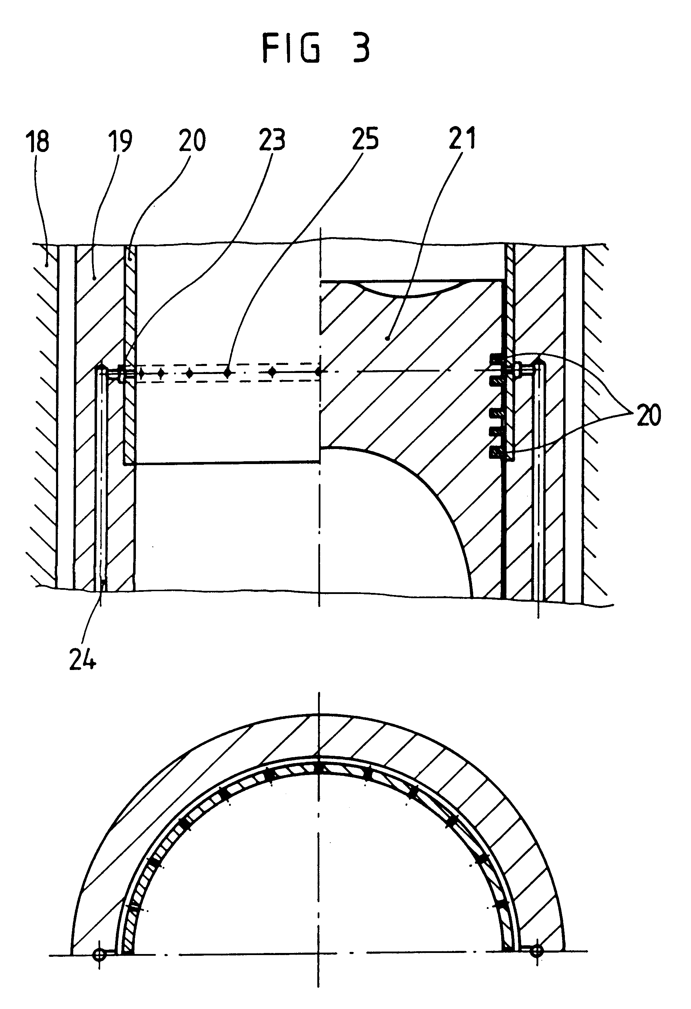

In Fig. 3 ist ein Ausschnitt aus einer Hubkolbenmaschine mit einem Zylinderblock 18 dargestellt, in den erfindungsgemäß aus einem Trägerteil 19 und einem Innenteil 20 bestehende Zylinderbuchsen aufgenommen sind. Das Innenteil 20 bildet eine Lauffläche für einen Kolben 21 mit Kolbenringen 22. Das Trägerteil 19 weist auf seiner inneren Oberfläche, vorzugsweise im Bereich des unteren Totpunktes der beiden oberen Kolbenringe 22, eine ringförmig umlaufende Ölnut 23 mit vorzugsweise zwei einander gegenüberliegenden, im Trägerteil 19 verlaufenden Ölzufuhrleitungen 24 auf. Gegenüber der Ölnut 23 sind im Innenteil 20 ringsherum eine Mehrzahl von Ölbohrungen 25 ausgeführt.

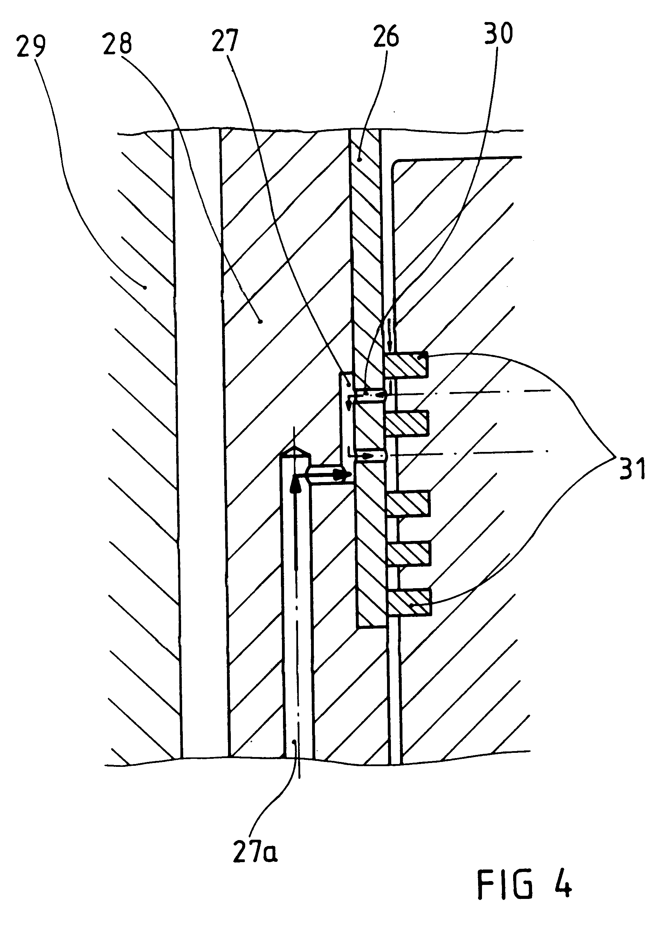

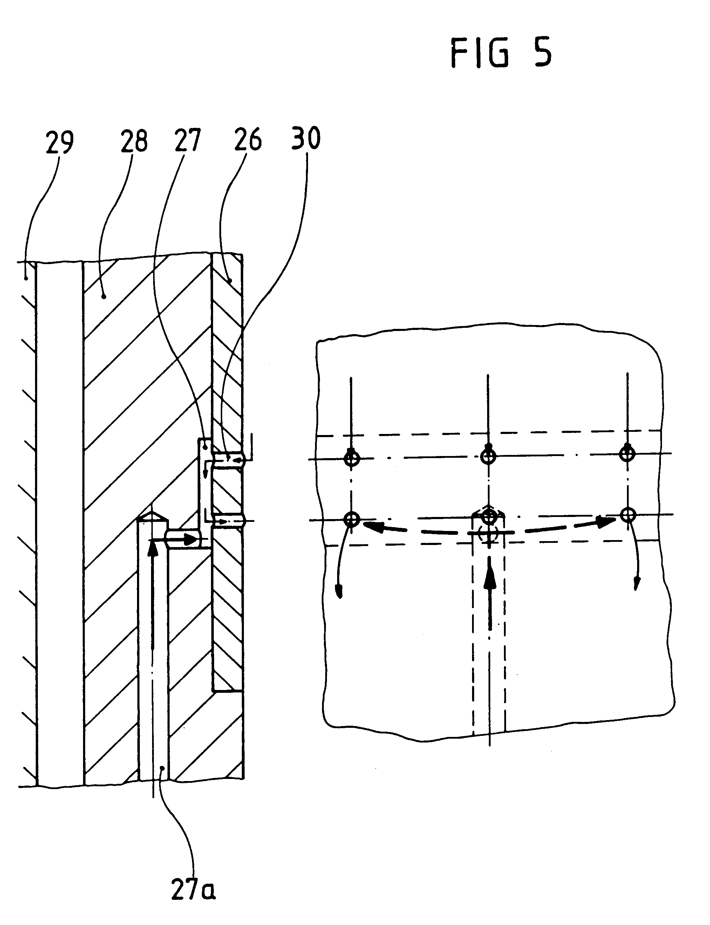

In weiterer Ausgestaltung gemäß Fig. 4 und 5 befinden sich in einem Innenteil 26 gegenüber einer Ölnut 27 und Zuführung 27a in einem Trägerteil 28, die zusammen in einem Zylinderblock 29 aufgenommen sind, mindestens zwei zueinander parallele Reihen von Ölbohrungen 30, wobei die Anordnungsreihen der Bohrungen 30 bei entsprechender Breite der Ölnut 27 mindestens so weit voneinander entfernt sind, daß sie einem Zwischenraum zwischen zweien der Kolbenringe 31 gegenüberstehen. Der Weg des Öles durch die Zuführungsleitung in die Ölnut 27 ist durch dicke Pfeile und der Gasdruck durch dünnere Pfeile angedeutet. Es bildet sich eine Taktschmierung dadurch aus, daß der höhere Gasdruck aus der Expansion im Raum zwischen den oberen Kolbenringen in den Raum zwischen dem Ring 2 und 3 abströmen kann, der weniger Druck enthält. Das Öl wird dabei mitgerissen.

**Patentansprüche**

1. Hubkolbenmaschine mit in einem Zylinderblock (1) angeordneten Zylinderbuchsen (2) und Kolben (3) mit Kolbenringen (3a), deren Zylinderbuchsen (2) ein äußeres Trägerteil (4) hoher Festigkeit und ein in seinem Inneren gehaltenes, eine Kolbenringlauffläche bildendes, auswechselbares Verschleißteil (5) umfassen und von außen durch das Trägerteil (4) dem Verschleißteil (5) Öl durch Kanäle zuführbar ist, dadurch gekennzeichnet, daß das Verschleißteil (5,12,20,26) einen sich konisch in seiner ganzen Länge nach unten verringernden Außendurchmesser aufweist und eine Dicke von 10 bis 20 % der Gesamtwandstärke besitzt und seine innere Oberfläche aus einem oberflächenvergüteten Kugelgraphitguß besteht, wobei in dem Trägerteil (4) und in dem in ihm aufgenommen Verschleißteil (5) miteinander verbundene, mit Schmieröl füllbare Nuten (14,15) und Ölzuführungsbohrungen (16,17) vorgesehen sind.

2. Hubkolbenmaschine nach Anspruch 1, dadurch gekennzeichnet, daß das Trägerteil (13) auf seiner Innenfläche, in deren oberen Bereich, und das Verschleißteil (12) auf seiner Außenfläche, in deren unterem Bereich, schraubenlinienförmige, Schmieröl führende Nuten (14,15) mit bei Träger- bezüglich Verschleißteil gegenläufiger Steigung aufweisen.

3. Hubkolbenmaschine nach Anspruch 1, dadurch gekennzeichnet, daß das Trägerteil (19) auf seiner inneren Oberfläche mindestens eine ringförmig umlaufende Ölnut (23) und das Verschleißteil (20) eine Mehrzahl von Bohrungen (25) gegenüber der Ölnut, vorzugsweise im Bereich des oberen Totpunktes der beiden oberen Kolbenringe (22), aufweisen.

4. Hubkolbenmaschine nach Anspruch 3, dadurch gekennzeichnet, daß die Bohrungen (30) im Verschleißteil (26) gegenüber der Ölnut (27) im Trägerteil (28) in mindestens zwei zueinander parallelen, um mindestens eine Kolbenringbreite von einander entfernten Reihen bei entsprechender Breite der Ölnut angeordnet sind.

**Claims**

1. Reciprocating-piston engine with cylinder liners (2), which are arranged in a cylinder block (1) together with pistons (3) comprising piston rings (3a), the cylinder liners (2) of which engine comprise an outer high-strength bearer part (4) and a replaceable wearing part (5), which is held inside the latter and forms a piston ring travel surface, and oil can be supplied through ducts to the wearing part (5) from outside via the bearer part (4), characterised in that the wearing part (5, 12, 20, 26) has an outside diameter which tapers downwards over its entire length and a thickness of 10 to 20 % of the overall wall thickness, and its inner surface consists of surface-finished nodular cast iron, grooves (14, 15) and oil-supply holes (16, 17), which communicate with one another and can be filled with lubricating oil, being provided in the bearer part (4) and in the wearing part (5), which is held in the latter.

2. Reciprocating-piston engine according to claim 1, characterised in that helical grooves (14, 15), which carry lubricating oil , are provided in the upper area of the inner surface of the bearer part (13) and in the lower area of the outer surface of the wearing part (12), which grooves slope in one direction in the bearer part and in the opposite direction in the wearing part.

3. Reciprocating-piston engine according to claim 1, characterised in that the bearer part (19) comprises at least one annular oil groove (23) in its inner surface, and the wearing part (20) comprises a plurality of holes (25) opposite the oil groove, preferably in the area of the top dead centre of the two upper piston rings (22).

4. Reciprocating-piston engine according to claim 3, characterised in that the holes (30) in the wearing part (26) are arranged opposite the oil groove (27) in the bearer part (28) in at least two parallel rows having a spacing of at least one piston ring width, with the oil groove being of a corresponding width.

**Revendications**

1. Machine à pistons avec des chemises de cylindre (2) et des pistons (3) avec segments de piston (3a), disposés dans un bloc-cylindre (1) dont les chemises de cylindre (2) comprennent une pièce de support extérieur (4) à haute résistance et une pièce d'usure (5) maintenue dans son intérieur, remplaçable et formant une surface de frottement pour les segments de piston, tandis que de l'huile peut être amenée par des canaux à travers la pièce de support (4) vers la pièce d'usure (5), caractérisée en ce que la pièce d'usure (5, 12, 20, 26) présente un diamètre extérieur diminuant vers le bas et conique sur toute sa longueur, et une épaisseur égale à 10 à 20% de l'épaisseur totale de la paroi et en ce que sa surface intérieure est constituée d'une fonte sphéroïdale traitée en surface, tandis que, dans la pièce de support (4) et dans la pièce d'usure (5) reprise par celle-ci, sont prévues des rainures (14, 15) connectées les unes aux autres et pouvant se remplir d'huile de lubrification, ainsi que des trous d'adduction d'huile (16, 17).

2. Machine à pistons selon la revendication 1, caractérisée en ce que la pièce de support (13) présente sur sa surface intérieure, et dans sa zone supérieure, et que la pièce d'usure (12) présente sur sa surface extérieure dans sa zone inférieure des rainures (14, 15) de forme hélicoïdale amenant l'huile de lubrification avec des pentes opposées dans la pièce de support par rapport à la pièce d'usure.

3. Machine à pistons selon la revendication 1, caractérisée en ce que la pièce de support (19) comporte, sur sa surface intérieure, au moins une rainure d'huile (23) annulaire et que la pièce d'usure (20) comporte plusieurs alésages (25) vis à vis de la rainure d'huile, de préférence dans la zone du point mort supérieur des deux segments de piston supérieurs (22).

4. Machine à pistons selon la revendication 3, caractérisée en ce que les alésages (30) sont disposés dans la pièce d'usure (26) vis à vis de la rainure d'huile (27) dans la pièce de support (28) dans au moins deux rangées parallèles l'une à l'autre et écartées l'une de l'autre d'au moins une largeur de segment de piston avec une largeur correspondante de la rainure d'huile.

FIG 1

# FIG 2

# FIG 3

FIG 4

# FIG 5

29  28  27  26  30

27a